# EUROPÄISCHE PATENTANMELDUNG

(11) **EP 3 398 998 A1**
(43) Veröffentlichungstag der Anmeldung: **07.11.2018**
(21) Anmeldenummer: 17169300.5
(22) Anmeldetag: 03.05.2017
(51) Int. Cl.: C09D 4/00, C09D 5/00, C09D 183/06, C09D 183/08

(54) **WÄSSRIGE SOL-GEL-ZUSAMMENSETZUNG ALS LAGERSTABILE VORSTUFE FÜR ZINKSTAUBFARBEN**

(71) Anmelder: Evonik Degussa GmbH, 45128 Essen (DE)
(72) Erfinder: ALBERT, Philipp, 79618 Rheinfelden (DE); BRINGMANN, Dennis, 79588 Efringen-Kirchen (DE); KIRBERG, Julia, 79618 Rheinfelden (DE); JUST, Eckhard, 79618 Rheinfelden (DE)

(57) **Zusammenfassung**

Die vorliegende Erfindung betrifft eine wässrige Sol-Gel-Zusammensetzung als lagerstabile, lösemittelfrei Vorstufe für Zinkstaubfarben, die auf der Umsetzung mindestens der Komponenten
(i) einem Glycidyloxypropylalkoxysilan der allgemeinen Formel (I)

X-Si(OR)₃ (I),

worin X für einen 3-Glycidyloxypropyl-Rest und R für einen Methyl- oder Ethyl-Rest stehen,
(ii) einem wässrigen Kieselsol mit einer durchschnittlichen Partikelgröße von 5 bis 150 nm und einem Feststoffgehalt von ≥ 45 bis ≤ 55 Gew.-%,
(iii) mindestens einer Säure ausgewählt aus der Reihe Salpetersäure, Schwefelsäure, Salzsäure, Phosphorsäure, Ameisensäure, Essigsäure und
(iv) einem Bis-Aminoalkoxysilan der allgemeinen Formel (II)

(R¹O)₃Si(CH₂)₃(NH)(CH₂)₃Si(OR¹)₃ (II),

worin R¹ einen Methyl- oder Ethyl-Rest darstellt,
sowie optional
(v) mindestens einem weiteren Alkoxysilan der allgemeinen Formel (III)

Yₙ-Si(OR³)₄₋ₙ (I),

worin Y einen Propyl-, Butyl-, Octyl-, 3-Mercaptopropyl-, 3-Ureidopropyl-oder 3-Isocyanatopropyl-Rest darstellt, R³ für einen Methyl- oder Ethyl-Rest steht und n gleich 0 oder 1 ist,
basiert, wobei man von einem Massenverhältnis der Komponente (ii) zu Komponente (i) von 0,55 bis 0,75 und einem Massenverhältnis der Komponente (ii) zu Komponente (iv) von 0,35 bis 0,55 ausgeht,
und
(vi) mindestens einen partikulären Füllstoff aus der Reihe Fällungskieselsäure, pyrogener Kieselsäure, kristalliner Silica, Kaolin, Feldspat, Talkum, Zinkoxid, Eisen(III)oxid, Aluminiumoxid, Titandioxid mit einem Gehalt von 5 bis 70 Gew.-%, bezogen auf die Zusammensetzung, enthält,
wobei die lagerstabile wässrige Sol-Gel-Zusammensetzung einen Gehalt an Alkohol von < 3 Gew.-%, bezogen auf die gesamte Zusammensetzung, sowie einen pH-Wert von 3,0 bis 6,5 aufweist,

Ferner betrifft die vorliegende Erfindung ein spezielles Verfahren zur Herstellung einer solchen Sol-Gel-Zusammensetzung und deren Verwendung.

## Beschreibung

Die vorliegende Erfindung betrifft eine wässrige Sol-Gel-Zusammensetzung als lagerstabile Vorstufe insbesondere für Zinkstaubfarben, ein Verfahren zu deren Herstellung sowie deren Verwendung.

Zinkstaubfarben werden im Korrosionsschutz eingesetzt, um Eisen und Stahl vor Korrosion zu schützen. Brückenkonstruktionen aus Stahl, Hochspannungsmasten und Pipelines sind nur einige exemplarische Anwendungen. Die Anwendung erfolgt vor Ort, indem die alte Beschichtung entfernt und der Stahl zum Beispiel durch Sandstrahlung gereinigt wird. Anschließend wird die Zinkstaubfarbe auf der Baustelle aufgesprüht. Kompliziert zu handhabende Mischungen sind für eine solche Anwendung vor Ort praktisch nicht geeignet bzw. von den Fachleuten wenig erwünscht, da bei mehrkomponentigen Systemen immer Fehler auftreten können. So sind vor Ort die erforderlichen Füllstoffe und Zusätze zu wiegen und in die Bindemittelformulierung einzurühren, zuletzt wird Zinkpulver eingerührt. Die bekannten Systeme sind nach Einarbeitung der Füllstoffe nicht lange die Bindemittelformulierung nicht besonders lange lagerstabil und müssen nach Herstellung bald verarbeitet werden. Aus diesem Grund sind Zinkstaubfarben, die nach Möglichkeit ohne größere Vorsorge und ohne einen größeren Aufwand vor Ort, gefordert.

Bindemittel auf Basis von Kieselsäureestern sind schon lange bekannt und werden als lösungsmittelhaltige Formulierungen mit Zinkstaub angeboten. Typische lösungsmittelhaltige, zweikomponentige Systeme bestehen aus dem Bindemittel als Komponente 1 und den Füllstoffen als Komponente 2. Diese lösungsmittelhaltigen Bindemittel werden sowohl als einkomponentige Formulierungen als auch als zweikomponentige Formulierungen hergestellt. Die Füllstoffe setzen sich je nach Anwendung aus sehr vielen verschiedenen Komponenten zusammen und müssen schon werksseitig gemischt werden. Dabei kann es bei der Lagerung und dem Transport zu Entmischungen kommen. Ferner ist bei diesen Systemen von Nachteil, dass sie Lösungsmittel enthalten und diese freisetzen, so besteht ein großes Interesse, solche Systeme durch wässrige Formulierungen zu ersetzen.

Auch gibt es schon wässrige Zinkstaubfarben, die Silane enthalten. Allerdings ist es bisher noch nicht möglich, eine stabile und lagerfähige sowie wässrige Vorstufe für Zinkstaubfarbe, d.h. ein stabiles und lagerfähiges sowie wässriges Bindemittelsystem einschließlich Füllstoffen jedoch zunächst noch ohne Zinkpulverzusatz, da Zink auch als Katalysator bei der Aushärtung der Systeme wirkt, herzustellen.

EP1191075 offenbart ein wasserbasiertes Zwei-Komponentensystem für Korrosionsschutzbeschichtungen auf Stahl. Die erste Komponente enthält Wasser, ein Aminoalkyltrialkoxysilan, eine Säure, ein Epoxysilan sowie leitfähige Pigmente bzw. Füllstoffe. Die zweite Komponente besteht aus Zinkpulver. Die fertige Mischung soll eine Verarbeitungszeit von 16 Stunden ermöglichen. Der Alkohol aus der Hydrolyse des Silans wurde nicht entfernt.

WO2006/079516 betrifft eine wässrige Binderzusammensetzung, die aus einem Epoxysilan, einem Formylaminopropyltrialkoxysilan sowie einem Tetraalkoxysilan besteht. Hier wird ein zweikomponentiges System beansprucht, das aus dem Bindemittel als Komponente 1 und den Füllstoffen als Komponente 2 besteht.

Auch WO2012/130544 beschreibt die Herstellung und Zusammensetzung einer wässrigen Zinkstaubfarbe.

Die Herstellung von wasserlöslichen Aminopolysiloxanen wird in EP0590270 beschrieben. Die Aminosilane werden in einer 50 %igen alkoholoischen Lösung mit einer entsprechenden Menge Wasser versetzt und bei 60 °C anhydrolysiert. Diese Produkte sind anschließend in Wasser löslich. Nachteilig ist nach wie vor der hohe Gehalt an organischen Lösungsmitteln und der damit einhergehende niedrige Flammpunkt.

DE10335178 beschreibt ebenfalls die Herstellung von wasserlöslichen Silansystemen, z.B. einer Mischung aus 3-Aminopropyltrialkoxysilan und Bis(trialkoxysilylpropyl)amin. Die Silanmischung wird mit einer definierten Wassermenge anhydrolysiert. Aber auch hier enthält die Silanmischung 25 bis 99,99 % Alkohol und ist damit nicht VOC-frei.

In US5051129 wird die Zusammensetzung einer wässrigen Lösung beansprucht, die aus einem wasserlöslichen Aminosilan und einem Alkyltrialkoxysilan besteht. Die Herstellung erfolgt durch Zugabe einer definierten Menge Wasser zur Silanmischung und anschließender Temperierung bei 60 °C. Die so hergestellte Silanmischung wird in einem bestimmten Verhältnis in Wasser gelöst und dient zur Hydrophobierung von Oberflächen.

In EP0716128 werden wasserbasierende organopolysiloxanhaltige Zusammensetzungen, Verfahren zu deren Herstellung und Verwendung beansprucht. Durch Mischen von wasserlöslichen Aminoalkylalkoxysilanen mit Alkyltrialkoxysilanen und/oder Dialkyldialkoxysilanen und Zugabe von Wasser bei einem definierten pH-Wert entstehen organopolysiloxanhaltige Zusammensetzungen. Der entstandene Hydrolysealkohol wird destillativ entfernt. Es werden deshalb VOC-freie wässrige polysiloxanhaltige Zusammensetzungen erhalten, die zur Hydrophobierung von Oberflächen, mineralischen Baustoffen und weiteren Anwendungen eingesetzt werden können.

In WO2000/39177 wird die Anwendung von Bis-Silylaminosilanen und/oder Bis-Silylpolysulfanen in wässrigen Lösungen beschrieben. Die Silane werden mit Wasser, einem Alkohol und optional Essigsäure gemischt und mindestens 24 h hydrolysiert. Anschließend erfolgt die Anwendung auf Metallen.

US6955728 beschreibt die Anwendung von Acetoxysilanen in Kombination mit anderen Silanen in wässrigen Lösungen und die Anwendung auf Metallen. Unter anderem werden auch Bis(trialkyoxysilylpropyl)amine in Kombination mit Acetoxysilanen eingesetzt. Über die Stabilität der wässrigen Lösungen wird keine Aussage gemacht bzw. es wird ein 2-komponentiges System empfohlen, das erst vor der Anwendung vereinigt wird. Die wässrigen Lösungen enthalten zumindest immer den Hydrolysealkohol.

In WO2004/076717 werden Bis-Silylaminosilane in Kombination mit weiteren Silanen und einem Metallchelat in wässrigen Lösungen eingesetzt. Die Silane werden durch eine Alterung von mindestens 2 Wochen in wässrigen Konzentraten teilweise hydrolysiert. Anschließend wird ein Metallchelat zugesetzt und mit Wasser weiter verdünnt. Darüber hinaus enthalten alle wässrigen Formulierungen nach wie vor den Alkohol aus der Hydrolyse. Die wässrigen Systeme werden zur Vorbehandlung von Metalloberflächen eingesetzt.

WO2004/076718 betrifft ein Verfahren zur Beschichtung einer metallischen Oberfläche mit einer wässrigen Lösung, die ein partiell hydrolysiertes Silan wie z.B. Bis-Silylamniosilan und ein partiell hydrolysiertes Fluorhaltiges Silan enthält. Durch den Einsatz des Fluor-haltigen Silans wird die Hydrophobie und die Korrosionsbeständigkeit des Beschichtungssystems verbessert. Der Hydrolysealkohol wird nicht aus den Systemen entfernt.

US5206285 beschreibt die Herstellung und Anwendung von wasserbasierenden Additionsprodukten aus einem Epoxy- und einem Aminosilan. Die wässrigen Silansysteme sind nicht lösungsmittelfrei. Sie werden zur Metallbeschichtung eingesetzt und sollen die Korrosionsbeständigkeit verbessern.

EP1760128 lehrt eine wässrige zweikomponentige Haftvermittlerzusammensetzung sowie deren Verwendung zum Verkleben oder Abdichten. Eine Komponente des Haftvermittlers kann ein Bis-Silylaminosilan enthalten.

DE102004037045 beansprucht wässrige Silan-Nanokomposite, die aus Glycidyloxypropylalkoxysilanen und wässrigen Kieselsolen in Anwesenheit eines Katalysators hergestellt werden. Die wässrigen Systeme sind praktisch lösungsmittelfrei und sind für Metallbeschichtungen geeignet. Nachteilig sind die hohen Vernetzungstemperaturen von 200 °C.

US6468336 beschreibt die Formulierung und Anwendung einer Korrosionsschutzbeschichtung für Stahl. Die wasserbasierte Formulierung enthält als Bindemittel Wasserglas und als Pigmente, Zink, Eisenschichtsilikate sowie weitere Füllstoffe. Die beschriebenen Formulierungen sollen in Schichtdicken von 15 bis 25 µm einen ausgezeichneten Korrosionsschutz erzielen.

In WO2000/46311 wird die Behandlung von Metallsubstraten mit einer Formulierung aus einem Ureidosilan, einem Multisilylsilan sowie einem Lösungsmittel beschrieben. Die Silane werden zuerst teilweise hydrolysiert und anschließend formuliert. Der Hydrolysealkohol wird nicht entfernt und die Formulierung wird ohne Pigmente eingesetzt.

In WO2002/22745 wird ein lösungsmittelfreier Korrosionsschutzprimer beansprucht. Der Primer setzt sich aus einem stabilisierten Kieselsol, einem Schichtsilikat, einem kalzinierten Aluminiumschichtsilikat sowie Zinkstaub zusammen. Die Trockenschichtdicke der Beschichtung beträgt ca. 15 - 25 µm. Die Abriebsbeständigkeit und die Verarbeitungszeit wurden bestimmt.

WO2003/022940 beansprucht ein Korrosionsschutzsystem, das aus einem wässrigen Kieselsol, optional einem organischen Harz, Zinkstaub sowie weiteren Additiven besteht. Die Systeme werden durch die Abriebsfestigkeit und die Bleistifthärte charakterisiert.

WO99/14277 beschreibt eine wässrige Primerzusammensetzung, die aus einem reaktiven Harz (Dispersion), einem organofunktionellen Silan (Amino- oder Epoxysilan, keine Bis-Silylsilane) und einem Härtungsreagenz besteht. Verklebungen von Metallsubstraten, die mit diesem Primer behandelt wurden, zeigen in Kombination mit einem Epoxyharz im Scherversuch sehr gute Festigkeiten.

In WO2008/133916 wird eine Methode zur Behandlung von Metalloberflächen beschrieben. Die Methode beinhaltet die Behandlung mit einer wässrigen Formulierung, die aus hydrolysierten/kondensierten Silanen besteht. Die eingesetzten Silane können Aminosilane sein, die Hydroxylgruppen enthalten. Die so hergestellten Beschichtungssysteme sind nicht Lösungsmittelfrei. Die behandelten Metallsubstrate wurden lackiert und zeigen im Vergleich zur Standardbehandlung eine geringere Unterwanderung am Ritz.

US6929826 beansprucht eine Methode zur Oberflächenbehandlung von Metallen. Die Methode beinhaltet die Behandlung mit einer Formulierung, die ein Epoxysilan und ein Tetralkoxysilan enthält.

In WO2006/137663 wird eine Zusammensetzung beschrieben, die aus einem Aminosilan und einem Epoxysilan besteht. Darüber hinaus enthält die Formulierung eine Magnesium- und Vanadiumverbindung sowie eine Säure. Die Herstellung erfolgt in einem Wasser/Alkohol-Gemisch. Die mit dieser Formulierung behandelten Metallsubstrate zeigen eine gute Korrosionsresistenz und eine gute Haftung zu organischen Beschichtungen. Die Systeme sind nicht lösungsmittelfrei.

WO 2009/059798 beansprucht eine Formulierung und Beschichtung eines Metalls. Die Formulierung besteht aus Tetraethoxysilan, Vinyltrimethoxysilan, Phenyltriethoxysilan, sowie Propyltriemethoxysilan. Darüber hinaus werden weitere Komponenten wie Alkohole, Katalysatoren, Kieselsole und Additive beansprucht. Die erfindungsgemäßen Beschichtungen müssen zur Härtung erwärmt werden. Die Formulierung soll Metallsubstrate vor Korrosion schützen.

EP 0274428 beansprucht eine Zusammensetzung, die aus einem Alkyltrialkoxysilan, einem Vinyltrialkoxysilan und/oder weiteren Silanen wie einem Epoxysilan, einem organischen Lösungsmittel sowie einem Aluminiumsol besteht.

WO2009/030538 lehrt wässrige Zusammensetzungen auf der Basis von Bis-alkoxyalkylsilylaminen, die im Wesentlichen frei von organischen Lösemitteln sind und auch beim Vernetzen keinen Alkohol freisetzen. Ferner können solche Systeme auf weiteren Organosilanen. wie 3-Glycidyloxypropyltrialkoxysilanen sowie Alkylalkoxysilanen beruhen und Füllstoffe, wie Kieselsäure, Titandioxid und Aluminiumoxid, sowie Farbpigmente enthalten. Darüber hinaus wird das Verfahren zur Herstellung sowie die Anwendung - unter anderem auch als Korrosionsschutzbeschichtung - offenbart.

Seitens der Anwender besteht daher ein großes Interesse, wässrige Zinkstaubfarben möglichst einfach auf der Baustelle vor Ort zubereiten und anwenden zu können.

Der vorliegenden Erfindung lag somit die Aufgabe zugrunde, eine möglichst lagerstabile und weitgehend lösemittelfreie Vorstufe auf Wasserbasis für eine verbesserte und einfachere Zubereitung einer Zinkstaubfarbe vor deren Applikation bereitzustellen. Insbesondere besteht auch das Anliegen, Fehlerquellen beim Mischen und Anwenden von Zinkstaubfarben vor Ort möglichst gering zu halten und ohne die eigentliche Wirkungsweise der Zinkstaubfarbe [nachfolgend auch Anwendungsformulierung oder -zusammensetzung genannt] zu mindern.

Die Aufgabe wurde erfindungsgemäß entsprechend den Merkmalen in der Ansprüchen gelöst.

Es wird ausdrücklich darauf hingewiesen, dass bei der vorliegenden Erfindung "lösemittelfrei" bedeutet, dass eine erfindungsgemäße Zusammensetzung keine organischen Lösemittel enthält, wobei Methanol und Ethanol in einer Menge von < 3 Gew.-%, bezogen auf die Zusammensetzung, hier nicht im Sinne eines organischen Lösemittels zu sehen und somit auszunehmen sind.

In überraschender Weise konnte eine wässrige, bereits füllstoffhaltige Sol-Gel-Zusammensetzung bereitgestellt werden, die im Wesentlichen lösemittelfrei und auch unter verschärften Lagerbedingungen, die einer Langzeitlagerung entsprechen, über 4 Monate bei 50°C lagerstabil ist. Eine solche Sol-Gel-Zusammensetzung basiert vorteilhaft auf einem speziellen Umsetzungsprodukt der Komponenten
(i) einem Glycidyloxypropylalkoxysilan der allgemeinen Formel (I)

   X-Si(OR)₃ (I),

   worin X für einen 3-Glycidyloxypropyl-Rest und R für einen Methyl- oder Ethyl-Rest stehen,
(ii) einem wässrigen Kieselsol mit einer durchschnittlichen Partikelgröße von 5 bis 150 nm und einem Feststoffgehalt [Trockenrückstand] von ≥ 20 bis ≤ 60 Gew.-%, vorzugsweise von ≥ 30 bis ≤ 55 Gew.-%, besonders vorzugsweise ≥ 45 bis ≤ 50 Gew.-%,
(iii) mindestens einer Säure ausgewählt aus der Reihe Salpetersäure, Schwefelsäure, Salzsäure, Phosphorsäure, Ameisensäure, Essigsäure und
(iv) einem Bis-Aminoalkoxysilan der allgemeinen Formel (II)

   (R¹O)₃Si(CH₂)₃(NH)(CH₂)₃Si(OR¹)₃ (II),

   worin R¹ einen Methyl- oder Ethyl-Rest darstellt,
   sowie optional
(v) mindestens einem weiteren Alkoxysilan der allgemeinen Formel (III)

   Yₙ-Si(OR³)₄₋ₙ (I),

   worin Y einen Propyl-, Butyl-, Octyl-, 3-Mercaptopropyl-, 3-Ureidopropyl- oder 3-Isocyanatopropyl-Rest darstellt, R³ für einen Methyl- oder Ethyl-Rest steht und n gleich 0 oder 1 ist,
   wobei man von einem Massenverhältnis der Komponente (ii) zu Komponente (i) von 0,55 bis 0,75 und
   einem Massenverhältnis der Komponente (ii) zu Komponente (iv) von 0,35 bis 0,55 ausgeht, vorzugsweise einem Massenverhältnis Komponente (ii) zu Komponente (i) von 0,60 bis 0,70 und einem Massenverhältnis der Komponente (ii) zu Komponente (iv) von 0,40 bis 0,50,
   und
(vi) mindestens einem partikulären Füllstoff aus der Reihe Fällungskieselsäure, pyrogener Kieselsäure, kristalliner Silica, Kaolin, Feldspat, Talkum, Zinkoxid, Eisen(III)oxid, Aluminiumoxid, Titandioxid mit einem Gehalt von 5 bis 70 Gew.-%, bezogen auf die Zusammensetzung,
   wobei die in der vorliegenden Sol-Gel-Zusammensetzung enthaltenen Silan-Kondensate bzw. -Cokondensate praktisch vollständig hydrolysiert vorliegen und die Sol-Gel-Zusammensetzung vorteilhaft einen Gehalt an Alkohol von < 3 Gew.-%, insbesondere Hydrolysealkohol, wie Methanol sowie Ethanol, vorzugsweise von 0,5 bis 2,5 Gew.-%, bezogen auf die gesamte Zusammensetzung, sowie einen pH-Wert von 3,0 bis 6,5, vorzugsweise 3,5 bis 6, besonders vorzugsweise 4 bis 5,5, insbesondere 4,0 bis 5,0, aufweist.

Somit ist eine vorliegende Sol-Gel-Zusammensetzung nicht nur lösemittelfrei sondern auch als VOC-arm (VOC = Volatile Organic Compounds = flüchtige organische Verbindungen) einzustufen. Auch bleibt die Viskosität und der pH-Wert einer vorliegenden Sol-Gel-Zusammensetzung nach Lagerung praktisch unverändert.

Insbesondere besteht der Vorteil einer vorliegenden Sol-Gel-Zusammensetzung darin, dass diese auch nach längerer Lagerung ohne weitere Füllstoffzusätze für eine Applikation vor Ort nur mit Zinkstaub gemischt werden muss und somit das Handling vor Ort deutlich vereinfacht und daher deutlich verbessert werden kann.

Auch bleiben Anwendungseigenschaften einer solchen Zinkstaubfarbe hinsichtlich Korrosionsschutzeigenschaften auch nach Lagerung praktisch unverändert vorteilhaft.

Darüber hinaus wurde gefunden, dass bei der Zubereitung der Zinkstaubfarbe ausgehend von einer vorliegenden Sol-Gelzusammensetzung durch Zusatz von ZnCl₂ und / oder MgCl₂ bzw. anderer Chloride neben Zink-Pulver zusätzlich eine noch schnellere Aushärtung der Zn-haltigen Anwendungszusammensetzung (Zinkstaubfarbe) erzielt werden kann.

Gegenstand der vorliegenden Erfindung ist daher eine wässrige Sol-Gel-Zusammensetzung [nachfolgend auch kurz als Zusammensetzung bezeichnet] als lagerstabile, lösemittelfreie Vorstufe für Zinkstaubfarben,
die auf der Umsetzung mindestens der Komponenten
(i) einem Glycidyloxypropylalkoxysilan der allgemeinen Formel (I)

   X-Si(OR)₃ (I),

   worin X für einen 3-Glycidyloxypropyl-Rest und R für einen Methyl- oder Ethyl-Rest stehen,
(ii) einem wässrigen Kieselsol mit einer durchschnittlichen Partikelgröße von 5 bis 150 nm und einem Feststoffgehalt [Trockenrückstand] von ≥ 20 bis ≤ 60 Gew.-%,
(iii) mindestens einer Säure ausgewählt aus der Reihe Salpetersäure, Schwefelsäure, Salzsäure, Phosphorsäure, Ameisensäure, Essigsäure und
(iv) einem Bis-Aminoalkoxysilan der allgemeinen Formel (II)

   (R¹O)₃Si(CH₂)₃(NH)(CH₂)₃Si(OR¹)₃ (II),

   worin R¹ einen Methyl- oder Ethyl-Rest darstellt,
   sowie optional
(v) mindestens einem weiteren Alkoxysilan der allgemeinen Formel (III)

   Yₙ-Si(OR³)₄₋ₙ (I),

   worin Y einen Propyl-, Butyl-, Octyl-, 3-Mercaptopropyl-, 3-Ureidopropyl- oder 3-Isocyanatopropyl-Rest darstellt, R³ für einen Methyl- oder Ethyl-Rest steht und n gleich 0 oder 1 ist,
   basiert, wobei man von einem Massenverhältnis der Komponente (ii) zu Komponente (i) von 0,55 bis 0,75 und einem Massenverhältnis der Komponente (ii) zu Komponente (iv) von 0,35 bis 0,55 ausgeht,
   und
(vi) mindestens einen partikulären Füllstoff aus der Reihe Fällungskieselsäure, pyrogener Kieselsäure, kristalliner Silica, Kaolin, Feldspat, Talkum, Zinkoxid, Eisen(III)oxid, Aluminiumoxid, Titandioxid mit einem Gehalt von 5 bis 70 Gew.-%, bezogen auf die Zusammensetzung, enthält,
   wobei die lagerstabile wässrige Sol-Gel-Zusammensetzung einen Gehalt an Alkohol von < 3 Gew.-%, bezogen auf die gesamte Zusammensetzung, sowie einen pH-Wert von 3,0 bis 6,5 aufweist.

Besonders vorteilhaft basiert eine erfindungsgemäße Zusammensetzung auf einem wässrigen Kieselsol als Komponente (ii) mit einem pH-Wert von 8,5 bis 10,5, d.h. einem wässrigen basischen Kieselsol. Insbesondere zeichnet sich ein wässriges Kieselsol als Komponente (ii) dadurch aus, dass die darin befindlichen amorphen Kieselsäurepartikel einen durchschnittlichen Durchmesser von ≥ 5 bis 150 nm, besonders vorzugsweise 8 bis 130 nm, insbesondere 15 bis 80 nm, aufweisen.

Als Füllstoffe gemäß Komponente (vi) zeichnen sich beispielsweise -aber nicht ausschließlich- Mica MKT mit einer durchschnittlichen Partikelgröße d₅₀ von 4,5 µm, Miox Micro 30 mit d₉₈ von 30 µm, Talk mit d₅₀ von 4 bis 10 µm, Sikron M500 mit d₅₀ von 3,0 µm, TiO₂ mit einer Kristallgröße im Bereich von 220 nm, ZnO einer Partikelgröße von 20 nm bis 10 µm und Eisenoxid Bayferrox Rot mit einer vorherrschenden Teilchengröße von 0,17 µm aus.

Gegenstand der vorliegenden Erfindung ist weiter ein Verfahren zur Herstellung einer erfindungsgemäßen Sol-Gel-Zusammensetzung
indem man
- Wasser und Säure gemäß Komponente (iii) geeigneterweise in wohl definierten Mengen vorlegt,
- unter Inertgasatmosphäre und unter Rühren das wässrige Kieselsol gemäß Komponente (ii) und anschließend gemäß Komponente (i) das Glycidyloxypropylalkoxysilan der Formel (I) dosiert, unter Rühren erwärmt und
- nachfolgend gemäß Komponente (iv) Bis-Aminoalkoxysilan der Formel (II) und ein oder mehrmals Säure gemäß Komponente (iii) sowie optional mindestens ein weiteres Alkoxysilan der Formel (III) gemäß Komponente (v) unter Rühren dosiert und nachreagieren lässt,
- anschließend den entstanden Hydrolysealkohol destillativ entfernt, optional Wasser zusetzt, nach Abkühlen auf Raumtemperatur das Umsetzungsprodukt filtriert und in das so erhaltene Filtrat mindestens einen partikulären Füllstoff gemäß Komponente (vi) einrührt und optional einen pH-Wert von 3,0 bis 6,5 unter Zusatz von Säure gemäß Komponente (iii) einstellt.

Bei der Durchführung des erfindungsgemäßen Verfahrens rührt man nach der Dosierung der Komponenten (ii) und (i) bevorzugt über eine Zeitspanne von 30 bis 90 Minuten und erwärmt auf eine Temperatur im Bereich von 50 bis 70 °C.

Ferner bevorzugt man bei der Durchführung des erfindungsgemäßen Verfahrens, dass man nach der Dosierung der Komponenten (iv) sowie optional (v) über eine Zeitspanne von 30 bis 300 Minuten rührt und bei einer Temperatur im Bereich von 50 bis 70 °C nachreagieren lässt.

Ebenfalls bevorzugt man bei der Durchführung des erfindungsgemäßen Verfahrens, dass man den bei der Umsetzung entstandenen Hydrolysealkohol, Methanol und/oder Ethanol aus dem System unter vermindertem Druck entfernt und gegebenenfalls die dabei entfernte Menge an Alkohol durch eine entsprechende Menge an Wasser ersetzt.

Nach der destillativen Entfernung des Hydrolysealkohols aus der kann man das Umsetzungsprodukt nach Abkühlen auf Raumtemperatur über eine Lackfilter filtrieren, um gegebenenfalls entstandene Trübungen zu entfernen.

Beim erfindungsgemäßem Verfahren wird in ein entsprechend erhaltenes Umsetzungsprodukts mindestens ein partikulärer Füllstoff aus der Reihe Fällungskieselsäure, pyrogener Kieselsäure, kristalliner Silica, Kaolin, Feldspat, Talkum, auch als Talk, Steatit, Speckstein oder Magnesiumsilikat bezeichnet, Zinkoxid, Eisen(III)oxid, Aluminiumoxid, Titandioxid in das besagte Umsetzungsprodukt oder in das Filtrat eindispergiert und dabei einen Füllstoffgehalt von 5 bis 70 Gew.-%, bezogen auf die Zusammensetzung, einstellt.

Im Allgemeinen stellt man eine erfindungsgemäße Sol-Gel-Zusammensetzung wie folgt her:
Eine Apparatur, die zum Beispiel Reaktionskolben, Dosiereinheit, Rührvorrichtung, Rückflußkühler, Heiz-/Kühlvorrichtung und Destillationsvorrichtung umfaßt, wird geeigneterweise zunächst mit einem Inertgas, beispielsweise Stickstoff, gespült. In der Regel legt man Wasser und Säure gemäß Komponente (iii) im Reaktionsgefäß in definierten Mengen vor. Unter Inertgasatmosphäre und unter Rühren wird nun das wässrige Kieselsol gemäß Komponente (ii) und anschließend gemäß Komponente (i) das Glycidyloxypropylalkoxysilan der Formel (I) in die Vorlage dosiert, unter Rühren wird das Gemisch erwärmt und nachfolgend gemäß Komponente (iv) Bis-Aminoalkoxysilan der Formel (II) und ein oder mehrmals Säure gemäß Komponente (iii) sowie optional mindestens ein weiteres Alkoxysilan der Formel (III) gemäß Komponente (v) unter Rühren zudosiert sowie das Reaktionsgemisch nachreagieren lassen. Aus den Einsatzstoffen einschließlich Kieselsol, insbesondere den eingesetzten Alkoxysilanen (auch kurz Silane genannt), entstandene Kondensate bzw. Cokondensate liegen vorteilhaft vollständig hydrolysiert vor. Anschließend wird aus dem Umsetzungsprodukt der entstandene Hydrolysealkohol destillativ entfernt, dabei kann optional Wasser zugesetzt werden. Nach Abkühlen des nach der Destillation in der Vorlage verblieben Produkts auf Raumtemperatur kann das Umsetzungsprodukt -sofern erforderlich, d.h. falls Trübstoffe vorliegen- filtriert werden und in das erhaltene Filtrat mindestens ein partikulärer Füllstoff gemäß Komponente (vi) eingerührt werden. Zusätzlich kann nach Überprüfung des pH-Werts in der vorliegenden Zusammensetzung diese auf einen pH-Wert von 3,0 bis 6,5 unter Zusatz von Säure gemäß Komponente (iii) eingestellt werden. Beim erfindungsgemäßen Verfahren kann man mindestens eine Säure aus der Reihe Salpetersäure, Schwefelsäure, Salzsäure, d.h. Chlorwasserstoffsäure (HCl), Phosphorsäure, Ameisensäure und Essigsäure verwenden, so kann man vorteilhaft aber auch zwei verschiedene oder mehrere verschiedene der genannten Säuren zur Herstellung einer erfindungsgemäßen Sol-Gel-Zusammensetzung einsetzen, beispielsweise - aber nicht ausschließlicheine anorganische und eine organische Säure.

So ist ebenfalls Gegenstand der vorliegenden Erfindung eine im wesentlichen lösemittelfreie, wässrige Sol-Gel-Zusammensetzung erhältlich nach dem erfindungsgemäßen Verfahren bzw. kann vorteilhaft nach dem erfindungsgemäßen Verfahren erhalten werden.

Gegenstand der vorliegenden Erfindung ist ferner die vorteilhafte Verwendung einer wässrigen Sol-Gel-Zusammensetzung nach einem der vorangehenden Ansprüche indem man in die wässrige, lagerstabile Sol-Gel-Zusammensetzung Zink-Partikel [auch kurz Zinkstaub genannt] eindispergiert, wobei die Zink-Partikel eine durchschnittlichen Partikelgröße von 3 µm bis 90µm aufweisen und als Katalysator für die Aushärtung der Dispersion dienen, und man die so erhaltene Dispersion als Korrosionsschutzmittel oder als Zusatz in Korrosionsschutzmitteln oder in Lacken oder in Farben verwendet. Insbesondere kann man eine erfindungsgemäße wässrige Sol-Gel-Zusammensetzung als lagerstabile Vorstufe für Zinkstaubfarben vorteilhaft verwenden.

Bevorzugt setzt man bei der Zubereitung einer Zinkstaubfarbe Zink-Partikel mit einer Größe von 3 µm bis 40 µm, besonders bevorzugt von 3 bis 14 µm, insbesondere von 3 bis 7 µm, ein. Üblicherweise setzt man bei dünnen Beschichtungen freilich kleinere Partikel ein, wobei eine entsprechende Trockenfilmdicke beispielsweise im Bereich von 20 µm liegt.

Darüber hinaus ist von Vorteil, wenn man bei der Zubereitung der Zinkstaubfarbe der wässrigen Sol-Gel-Zusammensetzung neben Zink-Staub (auch Zink-Pulver genannt) zusätzlich Zinkchlorid, beispielsweise als Zinkchloridpulver bzw. als Zinkstaub/Zinkchloridpulver-Gemisch oder als wässrige Zinkchloridlösung, zusetzt, da ein solches System nochmals schneller und besser aushärtet als ein Zweikomponentensystem aus einer wässrigen Sol-Gel-Zusammensetzung und Zinkpulver; auch kann man Chlorid z.B. MgCl₂ oder Salzsäure (HCl) zusetzen.

Die nachfolgenden Beispiele sollen die Erfindung näher erläutern ohne diese zu beschränken:

### Beispiele:

**Ausgangsstoffe und verwendete Abkürzungen:**

| Handelsname | Beschreibung | Hersteller |
|---|---|---|
| Dynasylan® GLYMO | 3-Gylcidyloxypropyltrimethoxysilan (GLYMO) | Evonik Degussa |
| Dynasylan® 1122 | Bis(triethoxysilylpropyl)amin (Bis-AMEO) | Evonik Degussa |
| Dynasylan® AMEO | 3-Aminopropyltriethoxysilan (AMEO) | Evonik Degussa |
| Dynasylan® PTMO | Propyltrimethoxysilan (PTMO) | Evonik Degussa |
| Dynasylan® MTMO | 3-Mercaptopropyltrimethoxysilan | Evonik Degussa |
| Dynasylan® 2201 EQ | 3-Ureidopropyltriethoxysilan in Methanol | Evonik Degussa |
| Si 264 | 3-Isocyanatopropyltriethoxysilan | Evonik Degussa |
| Dynasylan®A | Tetraethoxysilan | Evonik Degussa |
| Köstrosol® 3550 | Kieselsol, 35 nm | Chemische Werke Bad Köstritz |
| HP 1535 | Kieselsol, 15 nm | Silco International, USA |
| SI 5540 | Kieselsol, 130 nm | Silco International, USA |

### Analytische Untersuchungen:

### pH-Wert-Bestimmung:

Der pH-Wert der Reaktionsmischungen wurde mittels eines pH-Papier bestimmt (Spezialindikator pH 2,5 - 4,5, Merck; pH-Fix 0,0 - 6,0, Machery-Nagel)

### Bestimmung des Trockenrückstands (Feststoffgehalt):

Der Feststoffgehalt (auch als Trockenrückstand bezeichnet) der wässrigen Silansysteme wurde wie folgt bestimmt:
1 g der Probe wurde in eine kleine Porzellanschale eingewogen und bei 105 °C bis zur Gewichtskonstanz im Trockenschrank getrocknet.

### Bestimmung des SiO₂-Gehalts:

1,0 bis 5,0 g der Probe wurden in einem 400-ml-Becherglas mit einer Kjeldahl-Tablette und 20 ml Schwefelsäure versetzt und zunächst langsam erhitzt. Dabei wurde das Becherglas mit einem Uhrglas abgedeckt. Die Temperatur wurde erhöht, bis die Schwefelsäure stark rauchte und alle organischen Bestandteile zerstört waren und die Lösung klar und hell blieb. Die kalte Aufschlusslösung wurde mit dest. Wasser auf ca. 200 ml verdünnt und kurz aufgekocht (Wasser am Rande des Becherglases unter die Säure fließen lassen). Der Rückstand wurde durch einen Weißbandfilter filtriert und mit heißem Wasser gewaschen bis das Waschwasser einen pH-Wert von > 4 anzeigte (pH-Papier). Der Filter wurde in einem Platintiegel getrocknet, verascht und 1 Stunde bei 800 °C im Muffelofen geglüht. Der Rückstand wurde nach dem Wiegen mit Flusssäure abgeraucht, der Tiegel mittels eines Gebläsebrenners geglüht und gegebenenfalls nochmals bei 800 °C geglüht und nach dem Abkühlen gewogen. Die Differenz beider Wägungen entsprach dem Gehalt an SiO₂.
Auswertung: D x 100/E = Gew.-% SiO₂
D = Gewichtsdifferenz vor und nach dem Abfluorieren in mg
100 = Umrechnung auf %
E = Einwaage in mg

### Bestimmung des freien Methanol- und Ethanolgehalts:

Die Alkohol-Bestimmung wurde mittels GC durchgeführt.
Säule: RTX 200 (60 m)
Temperaturprogramm: 90-10-25-240-0
Detektor: FID
Injektionsmenge: 1,0 µl
Innerer Standard: 2-Butanol

### Beispiel 1

In einer 2-I-Rührapparatur mit Dosiervorrichtung und Rückflusskühler wurden unter Stickstoffatmosphäre 954,9 g Wasser und 2,16 g Ameisensäure (HCOOH = 85 Gew.-%) vorgelegt. Es wurden 392 g HP 1535 und anschließend 210,8 g GLYMO dosiert (pH nach der Zugabe = 3,0) und auf 65 °C erhitzt und 1 Stunde gerührt. Es wurden 11,79 g Ameisensäure (HCOOH = 85 Gew.-%) zugegeben, und über die Dosiervorrichtung wurden 90g Bis-AMEO dosiert. Insgesamt mussten noch 2,58 g Ameisensäure (HCOOH = 85 Gew.-%) zugegeben werden, um pH 4,0 zu erreichen. Danach wurde noch 3 Stunden bei 65 °C weitergerührt. Schließlich wurden bei ca. 160 mbar 291,96 g Alkohol/Wasser-Gemisch destillativ entfernt. Dem Ansatz wurden 12,23 g Wasser sowie 1,04 g Ameisensäure (HCOOH = 85 Gew.-%) zugefügt. Der auf Raumtemperatur abgekühlte Rückstand wurde über einen Lackfilter filtriert. Die Auswaage des Rückstandes betrug 1359,80g.

Es wurde eine leicht gelbe milchig trübe Flüssigkeit mit einem pH-Wert von 4,2 erhalten.

Das Produkt ist mindestens 6 Monate lagerstabil.
Trockenrückstand: 25,8 Gew.-%
SiO₂-Gehalt: 15,6 Gew.-%
Freies Methanol: 1,5 Gew.-%
Freies Ethanol: 0,7 Gew.-%

### Beispiel 2

In einer 2-I-Rührapparatur mit Dosiervorrichtung und Rückflusskühler wurden unter Stickstoffatmosphäre 501,8 g Wasser und 1,5 g Ameisensäure (HCOOH = 85 Gew.-%) vorgelegt. Es wurden 171,6 g HP 5540 und anschließend 105,7 g GLYMO dosiert (pH nach der Zugabe = 2,0) und auf 65 °C erhitzt und 1 Stunde gerührt. Es wurden 5,88 g Ameisensäure (HCOOH = 85 Gew.-%) zugegeben, und über die Dosiervorrichtung wurden 44,45 g Dynasylan® 1122 dosiert. Es mussten noch 0,98 g Ameisensäure (HCOOH = 85 Gew.-%) zugegeben werden, um pH 3,8 zu erreichen. Danach wurde noch 3 Stunden bei 65 °C weiter gerührt. Schließlich wurden bei ca. 120 mbar 159,4 g Alkohol/Wasser-Gemisch destillativ entfernt. Dem Ansatz wurden 24,57 g Wasser sowie 0,92 g Ameisensäure (HCOOH = 85 Gew.-%) zugefügt. Der auf Raumtemperatur abgekühlte Rückstand wurde über einen Lackfilter filtriert. Die Auswaage des Rückstandes betrug 661,44 g.

Es wurde eine milchig trübe Flüssigkeit mit einem pH-Wert von 4,0 erhalten.
Das Produkt ist mindestens 6 Monate lagerstabil.
Trockenrückstand: 25,8 Gew.-%
SiO₂-Gehalt: 15,5 Gew.-%
Freies Methanol: 1,1 Gew.-%
Freies Ethanol: 0,5 Gew.-%

### Beispiel 3

In einer 2-I-Rührapparatur mit Dosiervorrichtung und Rückflusskühler wurden unter Stickstoffatmosphäre 1150,7 g Wasser und 2,0 g Ameisensäure (HCOOH = 85 Gew.-%) vorgelegt. Es wurden 196 g HP 1535 und anschließend 210 g GLYMO dosiert (pH nach der Zugabe = 2,5) und auf 65 °C erhitzt und 1 Stunde gerührt. Es wurden 11,73 g Ameisensäure (HCOOH = 85 Gew.-%) zugegeben, und über die Dosiervorrichtung wurden 90g Bis-AMEO dosiert. Es mussten noch 2,6 g Ameisensäure (HCOOH = 85 Gew.-%) zugegeben werden, um pH 4,0 zu erreichen. Danach wurde noch 3 Stunden bei 65 °C weitergerührt. Schließlich wurden bei ca. 230 mbar 321,52 g Alkohol/Wasser-Gemisch destillativ entfernt. Dem Ansatz wurden 42,85 g Wasser sowie 1,0 g Ameisensäure (HCOOH = 85 Gew.-%) zugefügt. Der auf Raumtemperatur abgekühlte Rückstand wurde über einen Lackfilter filtriert. Die Auswaage des Rückstandes betrug 1329,12 g.

Es wurde eine milchig trübe Flüssigkeit mit einem pH-Wert von 4,3 erhalten.

Das Produkt ist mindestens 6 Monate lagerstabil.
Trockenrückstand: 20,7 Gew.-%
SiO₂-Gehalt: 10,7 Gew.-%
Freies Methanol: 1,1 Gew.-%
Freies Ethanol: 0,6 Gew.-%

### Beispiel 4

In einer 2-I-Rührapparatur mit Dosiervorrichtung und Rückflusskühler wurden unter Stickstoffatmosphäre 758,8 g Wasser und 2,13 g Ameisensäure (HCOOH = 85 Gew.-%) vorgelegt. Es wurden 588 g HP 1535 und anschließend 210 g GLYMO dosiert (pH nach der Zugabe = 2,5) und auf 65 °C erhitzt und 1 Stunde gerührt. Es wurden 11,73 g Ameisensäure (HCOOH = 85 Gew.-%) zugegeben, und über die Dosiervorrichtung wurden 90 g Dynasylan® 1122 dosiert. Danach wurde noch 3 Stunden bei 65 °C weitergerührt. Schließlich wurden bei ca. 300 mbar 306,17g Alkohol/Wasser-Gemisch destillativ entfernt. Dem Ansatz wurden 25,15 g Wasser zugefügt. Der auf Raumtemperatur abgekühlte Rückstand wurde über einen Lackfilter filtriert. Die Auswaage des Rückstandes betrug 1346,94 g.

Es wurde eine milchig trübe Flüssigkeit mit einem pH-Wert von 4,2 erhalten.

Das Produkt ist mindestens 6 Monate lagerstabil.
Trockenrückstand: 30,8 Gew.-%
SiO₂-Gehalt: 20,5 Gew.-%
Freies Methanol: 1,3 Gew.-%
Freies Ethanol: 0,6 Gew.-%

### Beispiel 5

In einer 2-I-Rührapparatur mit Dosiervorrichtung und Rückflusskühler wurden unter Stickstoffatmosphäre 831,9 g Wasser und 3,0 g Ameisensäure (HCOOH = 85 Gew.-%) vorgelegt. Es wurden 514,5 g HP 5540 und anschließend 210 g GLYMO dosiert (pH nach der Zugabe = 2,0) und auf 65 °C erhitzt und 1 Stunde gerührt. Es wurden 11,74 g Ameisensäure (HCOOH = 85 Gew.-%) zugegeben, und über die Dosiervorrichtung wurden 90 g Dynasylan® 1122 dosiert. Es mussten noch insgesamt 1,77 g Ameisensäure (HCOOH = 85 Gew.-%) zugegeben werden, um pH 4,0 zu erreichen. Danach wurde noch 3 Stunden bei 65 °C weitergerührt. Schließlich wurden bei ca. 180 mbar 314,63 g Alkohol/Wasser-Gemisch destillativ entfernt. Dem Ansatz wurden 38,02 g Wasser zugefügt. Der auf Raumtemperatur abgekühlte Rückstand wurde über einen Lackfilter filtriert. Die Auswaage des Rückstandes betrug 1334,02 g.

Es wurde eine milchig trübe Flüssigkeit mit einem pH-Wert von 4,3 erhalten.
Das Produkt ist mindestens 6 Monate lagerstabil.
Trockenrückstand: 31,0 Gew.-%
SiO₂-Gehalt: 20,7 Gew.-%
Freies Methanol: 1,1 Gew.-%
Freies Ethanol: 0,5 Gew.-%

### Beispiel 6

In einer 2-I-Rührapparatur mit Dosiervorrichtung und Rückflusskühler wurden unter Stickstoffatmosphäre 1003,7 g Wasser und 3,0 g Ameisensäure (HCOOH = 85 Gew.-%) vorgelegt. Es wurden 343 g HP 5540 und anschließend 210 g GLYMO zudosiert (pH nach der Zugabe = 3,0) und auf 65 °C erhitzt und 1 Stunde gerührt. Es wurden 11,88 g Ameisensäure (HCOOH = 85 Gew.-%) zugegeben, und über die Dosiervorrichtung wurden 90 g Bis-AMEO zudosiert. Es mussten noch 2,32 g Ameisensäure (HCOOH = 85 Gew.-%) zugegeben werden, um pH 4,0 zu erreichen. Danach wurde noch 3 Stunden bei 65 °C weitergerührt. Schließlich wurden bei ca. 200 mbar 311,97g Alkohol/Wasser-Gemisch destillativ entfernt. Dem Ansatz wurden 28,71 g Wasser zugefügt. Der auf Raumtemperatur abgekühlte Rückstand wurde über einen Lackfilter filtriert. Die Auswaage des Rückstandes betrug 1343,39 g.

Es wurde eine milchig trübe Flüssigkeit mit einem pH-Wert von 4,2 erhalten.

Das Produkt ist mindestens 6 Monate lagerstabil.
Trockenrückstand: 25,9 Gew.-%
SiO₂-Gehalt: 15,7 Gew.-%
Freies Methanol: 1,1 Gew.-%
Freies Ethanol: 0,5 Gew.-%

### Beispiel 7

In einer 2-I-Rührapparatur mit Dosiervorrichtung und Rückflusskühler wurden unter Stickstoffatmosphäre 1175,1 g Wasser und 3,0 g Ameisensäure (HCOOH = 85 Gew.-%) vorgelegt. Es wurden 171,5 g HP 5540 und anschließend 210 g GLYMO dosiert (pH nach der Zugabe = 2,0) und auf 65 °C erhitzt und 1 Stunde gerührt. Es wurden 11,73 g Ameisensäure (HCOOH = 85 Gew.-%) zugegeben, und über die Dosiervorrichtung wurden 90 g Bis-AMEO dosiert. Es mussten noch 0,91 g Ameisensäure (HCOOH = 85 Gew.-%) zugegeben werden, um pH 4,0 zu erreichen. Danach wurde noch 3 Stunden bei 65 °C weitergerührt. Schließlich wurden bei ca. 190 mbar 336,96 g Alkohol/Wasser-Gemisch destillativ entfernt. Dem Ansatz wurden 58,03 g Wasser zugefügt. Der auf Raumtemperatur abgekühlte Rückstand wurde über einen Lackfilter filtriert. Die Auswaage des Rückstandes betrug 1314,02 g.

Es wurde eine trübe hell beige Flüssigkeit mit einem pH-Wert von 5,0 erhalten.

Das Produkt ist mindestens 6 Monate lagerstabil.
Trockenrückstand: 21,2 Gew.-%
SiO₂-Gehalt: 10,7 Gew.-%
Freies Methanol: 0,9 Gew.-%
Freies Ethanol: 0,5 Gew.-%

### Beispiel 8

In einer 2-I-Rührapparatur mit Dosiervorrichtung und Rückflusskühler wurden unter Stickstoffatmosphäre 1203,89 g Wasser und 3,00 g Ameisensäure (HCOOH = 85 Gew.-%) vorgelegt. Es wurden anschließend 135,68 g Köstrosol 3550 zugegeben und 180 g Dynasylan® GLYMO über eine Dosiervorrichtung dosiert. Der Ansatz wurde auf 65 °C erhitzt und 1 Stunde bei dieser Temperatur gerührt. Es wurden 17,7 g Ameisensäure (HCOOH = 85 Gew.-%) zugegeben, und über die Dosiervorrichtung wurden 120 g Dynasylan® 1122 dosiert. Danach wurde 3 Stunden bei 65 °C weitergerührt und zusätzlich 1,11 g Ameisensäure (HCOOH = 85 Gew.-%) zugegeben. Schließlich wurde bei ca. 180 mbar 340,64 g Alkohol/Wasser-Gemisch destillativ entfernt. Dem Ansatz wurden 38,80 g VE-Wasser zugefügt.

Die Auswaage des Rückstands betrug 1347,82 g.

Dem Ansatz wurden erneut bei ca. 180 mbar 36,19 g Alkohol/Wasser-Gemisch destillativ entfernt und mit 51,22 g VE-Wasser versetzt. Der abgekühlte Rückstand wurde über eine Seitz T-950 Filterplatte filtriert.

Die Auswaage des Rückstands betrug 1347,82 g.

Es wurde eine milchig weiße Flüssigkeit mit einem pH-Wert von ca. 4,3 erhalten.

Das Produkt ist mindestens 6 Monate lagerstabil.
Trockenrückstand: 20,6 Gew.-%
SiO₂-Gehalt: 10,8 Gew.-%
Freies Methanol: 0,4 Gew.-%
Freies Ethanol: 0,7 Gew.-%

### Beispiel 9

In einer 2-I-Rührapparatur mit Dosiervorrichtung und Rückflusskühler wurden unter Stickstoffatmosphäre 1067,61 g Wasser und 3,00 g Ameisensäure (HCOOH = 85 Gew.-%) vorgelegt. Es wurden anschließend 271,09 g Köstrosol 3550 zugegeben und 180,16 g GLYMO über eine Dosiervorrichtung dosiert. Der Ansatz wurde auf 65 °C erhitzt und 1 Stunde bei dieser Temperatur gerührt.

Nachdem 1 Stunde bei 65 °C gerührt wurde, wurde der Ansatz mit zusätzlich 2,79 g Ameisensäure (HCOOH = 85 Gew.-%) auf pH 3,0 eingestellt und nochmal 0,5 Stunden bei 65 °C gerührt. Anschließend wurden 17,71 g Ameisensäure (HCOOH = 85 Gew.-%) zugegeben und 120,06 g Dynasylan® 1122 dosiert. Danach wurde der Ansatz 3 Stunden bei 65 °C weitergerührt und nochmals mit 3,21 g Ameisensäure (HCOOH = 85 Gew.-%) versetzt. Schließlich wurden bei ca. 160 mbar 343,80 g Alkohol/Wasser-Gemisch destillativ entfernt.
Dem Ansatz wurden 48,91 g VE-Wasser zugefügt.
Der abgekühlte Rückstand wurde über eine Seitz T-950 Filterplatte filtriert.
Die Auswaage des Rückstands betrug 1308,51 g.
Es wurde eine milchig weiße Flüssigkeit mit einem pH-Wert von ca. 4,0 erhalten.
Das Produkt ist mindestens 6 Monate lagerstabil.
Trockenrückstand: 26,0 Gew.-%
SiO₂-Gehalt: 15,8 Gew.-%
Freies Methanol: 1,0 Gew.-%
Freies Ethanol: 0,5 Gew.-%

### Beispiel 10

In einer 2-I-Rührapparatur mit Dosiervorrichtung und Rückflusskühler wurden unter Stickstoffatmosphäre 1112,88 g Wasser und 1,01 g Ameisensäure (HCOOH = 85 Gew.-%) vorgelegt. Es wurden zunächst 225,49 g Köstrosol K 1530 (pH nach der Zugabe = 3,5), dann 180 g GLYMO dosiert, auf 65 °C erhitzt und 1 Stunde gerührt. Anschließend wurden 18,71 g Ameisensäure (HCOOH = 85 Gew.-%) zugegeben, und über die Dosiervorrichtung wurden 120 g Bis-AMEO dosiert. Bei einem pH-Wert von 4,0 wurde 3 Stunden bei 65 °C gerührt. Schließlich wurden bei ca. 130 mbar 321,56 g Alkohol/Wasser-Gemisch destillativ entfernt. Dem Ansatz wurden 20,23 g Wasser zugefügt. Der auf RT abgekühlte Rückstand wurde über eine Seitz T-950-Filterplatte filtriert. Die Auswaage des Rückstandes betrug 1334,77 g.

Es wurde eine Flüssigkeit mit einem pH-Wert von 4,0 erhalten. Das Produkt ist mindestens 6 Monate lagerstabil.
Trockenrückstand: 20,9 Gew.-%
SiO₂-Gehalt: 10,5 Gew.-%
Freies Methanol: 1,2 Gew.-%
Freies Ethanol: 0,8 Gew.-%

### Beispiel 11

In einer 2-I-Rührapparatur mit Dosiervorrichtung und Rückflusskühler wurden unter Stickstoffatmosphäre 1265,70 g Wasser und 3,05 g Ameisensäure (HCOOH = 85 Gew.-%) vorgelegt. Es wurden zunächst 133,43 g Köstrosol 3550 (pH nach der Zugabe = 3,0), dann 134,93 g GLYMO dosiert, auf 65 °C erhitzt und 1 Stunde gerührt. Es wurden 21,08g Ameisensäure (HCOOH = 85 Gew.-%) zugegeben, und über die Dosiervorrichtung wurden 119,97 g Bis-AMEO dosiert. Nach 15 Minuten Rühren wurden 44,99 g PTMO zugegeben. Bei einem pH-Wert von 3,9 wurde 3 Stunden bei 65 °C gerührt. Schließlich wurden bei ca. 130 mbar 370,09 g Alkohol/Wasser-Gemisch destillativ entfernt. Dem Ansatz wurden 32,57 g Wasser zugefügt. Der auf RT abgekühlte Rückstand wurde über eine Seitz K-900-Filterplatte filtriert. Die Auswaage des Rückstandes betrug 1340,09 g.

Es wurde eine milchig trübe Flüssigkeit mit einem pH-Wert von 3,9 erhalten. Das Produkt ist mindestens 6 Monate lagerstabil.
Trockenrückstand: 19,8 Gew.-%
SiO₂-Gehalt: 11,0 Gew.-%
Freies Methanol: 1,3 Gew.-%
Freies Ethanol: 1,1 Gew.-%

### Beispiel 12

1267,5 g Wasser wurden in einem 2I-Rührapparatur mit Dosiervorrichtung und Rückflusskühler vorgelegt und mit 3,0 g HCOOH (85%ig) versetzt. Innerhalb 10 Minuten wurden 271,0 g Köstrosol 3550 zugetropft. Anschließend wurden über die Dosiervorrichtung 180 g GLYMO innerhalb 10 Minuten zudosiert. Es wurde 1 h lang bei 65°C gerührt. Anschließend wurden 17,7 g HCOOH (85%ig) zugesetzt und 120 g Dynasylan® 1127 innerhalb 10 Minuten zudosiert. Es wurde 3 h bei 65 °C gerührt.

Der pH-Wert lag zwischen 3,3 und 3,9. Vor und nach jeder Zugabe sollte er gemessen werden. Innerhalb der 3h sollte in regelmäßigen Abständen der pH kontrolliert werden.

Danach wurden bei ca. 130-200 mbar ca. 302 g Alkohol/Wasser-Gemisch abdestilliert. Dabei beobachten, ob der Ansatz dickflüssig wird, falls ja, Destillation abbrechen. Die Auswaage des Rückstandes betrug 1558 g, ggf. kann man VE-Wasser und/oder Säure zusetzen, pH beachten.

Das Produkt wurde bei Raumtemperatur über eine Seitz T-950 Filterplatte filtriert.
Trockenrückstand: 22,0 Gew.-%
SiO₂: 13,4 Gew.-%
Freies MeOH: 0,7 Gew.-%
Freies EtOH: 0,4 Gew.-%

### Beispiel 13

1067,5 g Wasser wurden in einem 2I-Rührapparatur mit Dosiervorrichtung und Rückflusskühler vorgelegt, mit 2,0 g H₃PO₄ (85%ig) versetzt und anschließend unter Rühren zügig mit 271,0 g Köstrosol 3550 vermischt. Über die Dosiervorrichtung wurden 165 g GLYMO innerhalb von 10 Minuten zudosiert. Es wurde 1 h lang bei 65°C gerührt. Anschließend wurden 33,0 g H₃PO₄ (85%ig) zugesetzt und 135 g Dynasylan® 1122 innerhalb 10 Minuten zudosiert. Es wurde 3 h bei 65 °C gerührt.

Der pH-Wert lag zwischen 3,3 und 3,9. Vor und nach jeder Zugabe sollte er gemessen werden. Innerhalb der 3h sollte in regelmäßigen Abständen der pH kontrolliert werden.

Danach wurden ca. 302 g Alkohol/Wasser-Gemisch abdestilliert. Dabei beobachten, ob der Ansatz dickflüssig wird, falls ja, Destillation abbrechen.

Die Auswaage des Rückstandes betrug 1355 g, ggf. kann VE-Wasser oder wässrige Säure zugesetzt werden; pH-Wert beachten.

Das Produkt wurde bei Raumtemperatur über eine Seitz T-900 Filterplatte filtriert.
Trockenrückstand: 25,4 Gew.-%
SiO₂: 15,8 Gew.-%
Freies MeOH: 0,7 Gew.-%
Freies EtOH: 0,5 Gew.-%

### Beispiel 14

887,6 g Wasser wurden in einem 2I-Rührapparatur mit Dosiervorrichtung und Rückflusskühler vorgelegt und mit 1,0 g HNO₃(65%ig) versetzt. Innerhalb 10 Minuten wurden 227,9 g Köstrosol 3550 zugetropft. Anschließend wurden über die Dosiervorrichtung 150 g GLYMO innerhalb 10 Minuten zudosiert. Es wurde 1 h lang bei 65°C gerührt. Anschließend wurden 44,7 g HNO₃ (65%ig) zugesetzt und 100 g Dynasylan® 1127 innerhalb 10 Minuten zudosiert. Es wurde 3 h bei 65 °C gerührt.

Der pH-Wert lag zwischen 3,3 und 3,9. Vor und nach jeder Zugabe sollte er gemessen werden. Innerhalb der 3h sollte in regelmäßigen Abständen der pH kontrolliert werden.

Danach wurden bei ca. 130-200 mbar ca. 252 g Alkohol/Wasser-Gemisch abdestilliert. Dabei beobachten, ob der Ansatz dickflüssig wird, falls ja, Destillation abbrechen. Die Auswaage des Rückstandes betrug 1139,5 g, ggf. Wasser sowie Säure zugeben und den pH-Wert messen.

Das Produkt wurde bei Raumtemperatur über eine Seitz T-950 Filterplatte filtriert.
Trockenrückstand: 22,8 Gew.-%
SiO₂: 15,6 Gew.-%
Freies MeOH: 0,8 Gew.-%
Freies EtOH: 0,4 Gew.-%

### Herstellung der Zusammensetzungen (BMF) für Lagerversuche

Für die Anwendungsbeispiele verwendete Zusätze:
- Zinkpulver 4P/16 (Everzinc, Belgium)
- MIOX MICRO 30 (Kärntner Montanindustrie)
- Bayferrox Rot 130 BM (Harald-Scholz Co. & GmbH)
- Zinkoxid Red Seal (Everzinc, Belgium)
- M500 kristalliner Silica Staub (SIBELCO)
- Mica MKT (Imerys Ceramics, France)
- Titandioxid RDI-S (Huntsman)
- Talk (Talc Extra Blanco, Minerals I Derivats S.A. Spain)

Die betreffenden Zusätze wurden mit einem Dispermat CA 40 DSC in eine Formulierung aus den vorangehenden Beispielen eingearbeitet. Die Viskositäten wurden mit einem Auslaufbecher 4 mm nach DIN bestimmt.

**Tabelle 1 zeigt die Zusammensetzungen (BMF) für Lagerversuche. Zur Herstellung der Zusammensetzungen BMF2 bis 34 wurden ausgehend von den Formulierung aus den betreffenden Beispielen partikulären Stoffe FS1 bis FS8 unter Zusatz von Wasser eindispergiert (FS1= MIOX Micro 30, FS2 = MICA MKT, FS3 = Sibelco, FS4 = Bayferrox Rot BM 130, FS5 = Zinkoxid, FS6 = Titandioxid, FS7 = Talc Extra Blanco, FS8 = Zinkpulver 4P/16)**

| | Fromulierung aus Beispiel | Anteil der Formu-lierung an der Zusammensetzung in Gew.-% | Zusatz an Wasser zur Formulierung in Gew.-%, bezogen auf die Zusammensetzung | FS1 in Gew.-%, bezogen auf die Zusammensetzung | FS2 in Gew.-%, bezogen auf die Zusammensetzung | FS3 in Gew.-%, bezogen auf die Zusammensetzung | FS4 in Gew.-%, bezogen auf die Zusammensetzung | FS% in Gew.-%, bezogen auf die Zusammensetzung | FS6 in Gew.-%, bezogen auf die Zusammensetzung | FS7 in Gew.-%, bezogen auf die Zusammensetzung | FS8 in Gew.-%, bezogen auf die Zusammensetzung |
|---|---|---|---|---|---|---|---|---|---|---|---|
| BMF1 | 12 | 100 | - | - | - | - | - | - | - | - | - |
| BMF2 | 12 | 90 | 10 | - | - | - | - | - | - | - | - |
| BMF3 | 12 | 69,5 | 23 | - | - | - | - | 7,5 | - | - | - |
| BMF4 | 12 | 60 | 20 | - | - | - | - | 20 | - | - | - |
| BMF5 | 12 | 56 | 7 | - | 37 | - | - | - | - | - | - |
| BMF6 | 12 | 47 | 6 | - | 47 | - | - | - | - | - | - |
| BMF7 | 12 | 56 | 7 | 37 | - | - | - | - | - | - | - |
| BMF8 | 12 | 47 | 6 | 47 | - | - | - | - | - | - | - |
| BMF9 | 12 | 56 | 7 | - | - | 37 | - | - | - | - | - |
| BMF10 | 12 | 47 | 6 | - | - | 47 | - | - | - | - | - |
| BMF11 | 12 | 56 | 7 | - | - | - | - | - | 37 | - | - |
| BMF12 | 12 | 47 | 6 | - | - | - | - | - | 47 | - | - |
| BMF13 | 12 | 70 | 23 | - | - | - | - | 7 | - | - | - |
| BMF14 | 12 | 60 | 20 | - | - | - | - | 20 | - | - | - |
| BMF15 | 12 | 50 | 17 | - | 33 | - | - | - | - | - | - |
| BMF16 | 12 | 43 | 14 | - | 43 | - | - | - | - | - | - |
| BMF17 | 12 | 50 | 17 | 33 | - | - | - | - | - | - | - |
| BMF18 | 12 | 43 | 14 | 43 | - | - | - | - | - | - | - |
| BMF19 | 12 | 50 | 17 | - | - | 33 | - | - | - | - | - |
| BMF20 | 12 | 43 | 14 | - | - | 43 | - | - | - | - | - |
| BMF 21 | 12 | 56 | 7 | - | - | - | - | - | 33 | - | - |
| BMF22 | 12 | 47 | 6 | - | - | - | - | - | 43 | - | - |
| BMF23 | 12 | 50 | - | 18,8 | 18,8 | - | - | 12,4 | - | - | - |
| BMF24 | 12 | 47 | 6 | 25 | - | - | 22 | - | - | - | - |
| BMF25 | 12 | 50 | 17 | 20 | - | - | 13 | - | - | - | - |
| BMF26 | 12 | 43 | 14 | 25 | - | - | 18 | - | - | - | - |
| BMF27 | 12 | 56 | 7 | 20 | - | - | - | - | 17 | - | - |
| BMF28 | 12 | 47 | 6 | 25 | - | - | - | - | 22 | - | - |
| BMF29 | 12 | 32,8 | - | 50 | - | - | - | 17,2 | - | - | - |
| BMF30 | 12 | 42,4 | 11,3 | - | 22,3 | - | - | 24,0 | - | - | - |
| BMF31 | 12 | 56,4 | - | - | 11 | 10,6 | 5,5 | 11 | - | 5,5 | - |
| BMF32 | 12 | 47 | 6 | 25 | - | - | - | - | - | 22 | - |
| BMF33 | 12 | 51,0 | 14 | 25,5 | | | | 9,5 | | | - |
| BMF34 | 12 | 62 | - | - | - | - | - | - | - | - | 38 |

**Tabelle 2 zeigt die pH-Werte sowie die Viskositäten der BMFs zu Beginn und nach 4 Monaten Lagerung bei 50 °C.**

| | vor Wärmelagerung | | nach Wärmelagerung 4 Monate bei 50°C | | |
|---|---|---|---|---|---|
| | pH-Wert | Viskosität DIN 4 mm / sec | pH-Wert | Viskosität DIN 4 mm / sec | Aussehen nach Lagerung |
| BMF1 | 3,3 | 11 | 3,3 | 11 | keine Veränderung |
| BMF2 | 3,4 | 12 | 3,2 | 12 | keine Veränderung |
| BMF3 | 6,0 | 22 | 6,2 | 21 | Bodensatz, der leicht aufgerührt werden kann |
| BMF4 | 6,1 | 24 | 6,0 | 24 | Bodensatz, der leicht aufgerührt werden kann |
| BMF5 | 3,4 | 30 | 3,3 | 29 | Bodensatz, der leicht aufgerührt werden kann |
| BMF6 | 3,4 | 120 | 3,4 | 120 | Bodensatz, der leicht aufgerührt werden kann |
| BMF7 | 6,3 | 17 | 6,2 | 16 | Bodensatz, der leicht aufgerührt werden kann |
| BMF8 | 6,5 | 18 | 6,7 | 19 | Bodensatz, der leicht aufgerührt werden kann |
| BMF9 | 3,1 | 19 | 3,0 | 19 | Bodensatz, der leicht aufgerührt werden kann |
| BMF10 | 3,3 | 21 | 3,2 | 22 | Bodensatz, der leicht aufgerührt werden kann |
| BMF11 | 3,4 | 25 | 3,4 | 26 | Bodensatz, der leicht aufgerührt werden kann |
| BMF12 | 3,2 | 28 | 3,2 | 28 | Bodensatz, der leicht aufgerührt werden kann |
| BMF13 | 6,1 | 18 | 6,0 | 18 | Bodensatz, der leicht aufgerührt werden kann |
| BMF14 | 6,1 | 20 | 6,2 | 20 | Bodensatz, der leicht aufgerührt werden kann |
| BMF15 | 3,2 | 30 | 3,1 | 31 | Bodensatz, der leicht aufgerührt werden kann |
| BMF16 | 3,1 | 64 | 3,0 | 60 | Bodensatz, der leicht aufgerührt werden kann |
| BMF17 | 6,3 | 14 | 6,2 | 14 | Bodensatz, der leicht aufgerührt werden kann |
| BMF18 | 6,3 | 15 | 6,3 | 16 | Bodensatz, der leicht aufgerührt werden kann |
| BMF19 | 3,2 | 14 | 3,2 | 14 | Bodensatz, der leicht aufgerührt werden kann |
| BMF20 | 3,4 | 16 | 3,4 | 16 | Bodensatz, der leicht aufgerührt werden kann |
| BMF21 | 3,2 | 20 | 3,3 | 19 | Bodensatz, der leicht aufgerührt werden kann |
| BMF22 | 3,3 | 22 | 3,1 | 22 | Bodensatz, der leicht aufgerührt werden kann |
| BMF23 | 6,1 | 16 | 6,1 | 16 | Bodensatz, der leicht aufgerührt werden kann |
| BMF24 | 6,2 | 18 | 6,3 | 18 | Bodensatz, der leicht aufgerührt werden kann |
| BMF25 | 6,1 | 14 | 6,1 | 15 | Bodensatz, der leicht aufgerührt werden kann |
| BMF26 | 6,0 | 17 | 6,2 | 18 | Bodensatz, der leicht aufgerührt werden kann |
| BMF27 | 6,0 | 18 | 6,1 | 18 | Bodensatz, der leicht aufgerührt werden kann |
| BMF28 | 6,1 | 20 | 6,1 | 20 | Bodensatz, der leicht aufgerührt werden kann |
| BMF29 | 6,1 | 15 | 6,1 | 15 | Bodensatz, der leicht aufgerührt werden kann |
| BMF30 | 6,0 | 17 | 6,2 | 18 | Bodensatz, der leicht aufgerührt werden kann |
| BMF31 | 6,3 | 21 | 6,1 | 22 | Bodensatz, der leicht aufgerührt werden kann |
| BMF32 | 6,2 | 24 | 6,1 | 24 | Bodensatz, der leicht aufgerührt werden kann |
| BMF33 | 5,9 | 16 | 6,1 | 14 | Bodensatz, der leicht aufgerührt werden kann |
| BMF34 | 7,3 | 18 | - | - | nach einem Tag geliert / ausgehärtet |

Wie der Tabelle 2 entnommen werden kann, sind die alle erfindungsgemäßen Zusammensetzungen BMF2 bis BMF33 nach einer Lagerung über 4 Monaten bei 50 °C stabil (pH und Viskosität ändern sich praktisch nicht), solange der pH der Bindemittelformulierung < 7 ist. Sollte der pH einer Bindemittelformulierung durch den Zusatz besagter partikulärer Stoffe (FS1 bis FS7) auf > 6,5 ansteigen, kann er mit einer der besagten Säuren auf < 6,6 eingestellt werden. BMF 34 zeigt die katalytische Wirkung des ZinkStaubs für die Härtung des Systems.

### Anwendungstechnische Prüfung der gelagerten BMFs

**Tabelle 3: Für die Anwendungsbeispiele (EF1 bis EF10) wurden folgende BMFs eingesetzt:**

| Anwendungsformulierung | verwendete BMFs, vgl. Tabellen 2 | Gewichtsanteil an BMF in der Anwendungsformulierung | Gewichtsanteil an Zinkpulver 4/P16 in der Anwendungsformulierung |
|---|---|---|---|
| EF 1 | BMF1 | 16 | 84 |
| EF2 | BMF3 | 72,1 | 27,9 |
| EF 3 | BMF4 | 72,0 | 28,0 |
| EF4 | BMF17 | 72,2 | 27,8 |
| EF 5 | BMF18 | 72,2 | 27,8 |
| EF 6 | BMF33 | 32 | 68 |
| EF 7 | BMF31 | 67,8 | 32,8 |
| EF 8 | BMF23 | 64 | 36 |
| EF 9 | BMF29 | 70 | 30 |
| EF 10 | BMF30 | 36 | 64 |

Die in Tabelle 3 aufgeführten Anwendungsformulierungen wurden auf Stahlbleche appliziert.

### Reinigung der Stahlprüfbleche R-36 aus DC01 C290,152x76x0,8 mm (Rocholl)

Die Stahlprüfbleche wurden in ein alkalisches Reinigungsbad gestellt (Zusammensetzung: 10,0 g/l S 5610, pH 11,5, 60 °C, 35 Sek.). Nach der alkalischen Reinigung wurden die Metallsubstrate mit VE-Wasser gespült. Das überschüssige Wasser wurde mit einer Druckluftpistole von der Oberfläche abgeblasen.

| | |
|---|---|
| Applikation: | Nassfilmdicke Spiralrakel 60 µm |
| Trockenfilmdicke: | 20-30 µm |
| Gitterschnitt: | nach EN ISO 2409 |
| Korrosionstest: | Neutraler Salzsprühtest (NSS) nach DIN EN ISO 9227 |
| Abriebfestigkeit: | Scrubtest mit Elektronic Crockmeter M238BB von SDL Atlas, Einwirken von Wasser 15 sec, anschließend 10 Doppelhübe mit Wypall X60 von Kimberly Clark, Beurteilung: 10= keine Veränderung, 0= Beschichtung komplett abgerieben |

Die gemäß Tabellen 3 hergestellten Zn-haltigen Anwendungsformulierungen wurden nach dem Beschichten 24 Stunden bei 20 °C getrocknet/gehärtet und geprüft.

**In Tabelle 4 sind die Testergebnisse zusammengestellt.**

| Anwendungsformulierung | Ergebnisse ohne vorhergehende Lagerung der eingesetzten BMFs | | | Ergebnisse mit BMFs, die zuvor über 4 Monate bei 50°C gelagert wurden | | |
|---|---|---|---|---|---|---|
| | Scrubtest | Gitterschnitt | NSS | Scrubtest | Gitterschnitt | NSS |
| EF 1 | 5 | Gt0 | nach 80 Stunden Korrosion auf gesamter Fläche | 4 | Gt0 | nach 80 Stunden Korrosion auf gesamter Fläche |
| EF2 | 6 | Gt1 | nach 150 Stunden Korrosion auf gesamter Fläche | 6 | Gt1 | nach 250 Stunden Korrosion auf gesamter Fläche |
| EF 3 | 6 | Gt1 | nach 150 Stunden Korrosion auf gesamter Fläche | 7 | Gt1 | nach 150 Stunden Korrosion auf gesamter Fläche |
| EF4 | 6 | Gt1 | nach 200 Stunden Korrosion auf gesamter Fläche | 7 | Gt1 | nach 250 Stunden Korrosion auf gesamter Fläche |
| EF 5 | 6 | Gt1 | nach 200 Stunden Korrosion auf gesamter Fläche | 7 | Gt1 | nach 250 Stunden Korrosion auf gesamter Fläche |
| EF 6 | 5 | Gt1 | nach 500 Stunden leichte Korrosion auf Fläche | 5 | Gt1 | nach 500 Stunden leichte Korrosion auf Fläche |
| EF 7 | 8 | Gt1 | nach 300 Korrosion auf gesamter Fläche | 7 | Gt1 | nach 300 Korrosion auf gesamter Fläche |
| EF 8 | 10 | Gt1 | nach 300 Korrosion auf gesamter Fläche | 9 | Gt1 | nach 300 Korrosion auf gesamter Fläche |
| EF 9 | 9 | Gt1 | nach 350 Korrosion auf gesamter Fläche | 9 | Gt1 | nach 350 Korrosion auf gesamter Fläche |
| EF 10 | 8 | Gt1 | nach 500 Stunden leichte Korrosion auf Fläche | 9 | Gt1 | nach 500 Stunden leichte Korrosion auf Fläche |

Wie Tabelle 4 entnommen werden kann, sind die anwendungstechnischen Ergebnisse vor und nach Lagerung identisch. Das zeigt, dass die erfindungsgemäßen Zusammensetzungen ohne Probleme als lagerstabile und vorteilhaft zu handhabende wässrige Systeme bzw. Vorstufen für Zinkstaubfarben vorteilhaft genutzt werden können.

## Patentansprüche

1. Wässrige Sol-Gel-Zusammensetzung als lagerstabile, lösemittelfrei Vorstufe für Zinkstaubfarben, die auf der Umsetzung mindestens der Komponenten
(i) einem Glycidyloxypropylalkoxysilan der allgemeinen Formel (I)
X-Si(OR)₃ (I),
worin X für einen 3-Glycidyloxypropyl-Rest und R für einen Methyl- oder Ethyl-Rest stehen,
(ii) einem wässrigen Kieselsol mit einer durchschnittlichen Partikelgröße von 5 bis 150 nm und einem Feststoffgehalt von ≥ 20 bis ≤ 60 Gew.-%,
(iii) mindestens einer Säure ausgewählt aus der Reihe Salpetersäure, Schwefelsäure, Salzsäure, Phosphorsäure, Ameisensäure, Essigsäure und
(iv) einem Bis-Aminoalkoxysilan der allgemeinen Formel (II)
(R¹O)₃Si(CH₂)₃(NH)(CH₂)₃Si(OR¹)₃ (II),
worin R¹ einen Methyl- oder Ethyl-Rest darstellt,
sowie optional
(v) mindestens einem weiteren Alkoxysilan der allgemeinen Formel (III)
Yₙ-Si(OR³)₄₋ₙ (I),
worin Y einen Propyl-, Butyl-, Octyl-, 3-Mercaptopropyl-, 3-Ureidopropyl- oder 3-Isocyanatopropyl-Rest darstellt, R³ für einen Methyl- oder Ethyl-Rest steht und n gleich 0 oder 1 ist,
basiert, wobei man von einem Massenverhältnis der Komponente (ii) zu Komponente (i) von 0,55 bis 0,75 und einem Massenverhältnis der Komponente (ii) zu Komponente (iv) von 0,35 bis 0,55 ausgeht, und
(vi) mindestens einen partikulären Füllstoff aus der Reihe Fällungskieselsäure, pyrogener Kieselsäure, kristalliner Silica, Kaolin, Feldspat, Talkum, Zinkoxid, Eisen(III)oxid, Aluminiumoxid, Titandioxid mit einem Gehalt von 5 bis 70 Gew.-%, bezogen auf die Zusammensetzung, enthält,
wobei die lagerstabile wässrige Sol-Gel-Zusammensetzung einen Gehalt an Alkohol von < 3 Gew.-%, bezogen auf die gesamte Zusammensetzung, sowie einen pH-Wert von 3,0 bis 6,5 aufweist.

2. Zusammensetzung nach Anspruch 1,
**gekennzeichnet durch** ein Massenverhältnis Komponente (ii) zu Komponente (i) von 0,60 bis 0,70 und einem Massenverhältnis der Komponente (ii) zu Komponente (iv) von 0,40 bis 0,50 ausgeht..

3. Zusammensetzung nach Anspruch 1 oder 2,
**gekennzeichnet durch** ein wässriges Kieselsol als Komponente (ii) mit einem pH-Wert von 8,5 bis 10,5.

4. Zusammensetzung nach einem der Ansprüche 1 bis 3,
**gekennzeichnet durch** ein wässriges Kieselsol als Komponente (ii), wobei die darin befindlichen amorphen Kieselsäurepartikel einen durchschnittlichen Durchmesser von ≥ 5 bis 150 nm, besonders vorzugsweise 8 bis 130 nm, insbesondere 15 bis 80 nm, aufweisen.

5. Zusammensetzung nach einem der Ansprüche 1 bis 4,
**gekennzeichnet durch** einen Gehalt an Methanol und/oder Ethanol von < 3 Gew.-%, bezogen auf die gesamte Zusammensetzung.

6. Zusammensetzung nach Anspruch 5,
**gekennzeichnet durch** einen Gehalt an Methanol und/oder Ethanol von 0,5 bis 2,5 Gew.-%, bezogen auf die gesamte Zusammensetzung.

7. Verfahren zur Herstellung einer Sol-Gel-Zusammensetzung nach einem der Ansprüche 1 bis 6, indem man
- Wasser und Säure gemäß Komponente (iii) vorlegt,
- unter Inertgasatmosphäre und unter Rühren das wässrige Kieselsol gemäß Komponente (ii) und anschließend gemäß Komponente (i) das Glycidyloxypropylalkoxysilan der Formel (I) dosiert, unter Rühren erwärmt und
- nachfolgend gemäß Komponente (iv) Bis-Aminoalkoxysilan der Formel (II) und ein oder mehrmals Säure gemäß Komponente (iii) sowie optional mindestens ein weiteres Alkoxysilan der Formel (III) gemäß Komponente (v) unter Rühren dosiert und nachreagieren lässt,
- anschließend den entstanden Hydrolysealkohol destillativ entfernt, optional Wasser zusetzt, nach Abkühlen auf Raumtemperatur das Umsetzungsprodukt filtriert und in das so erhaltene Filtrat mindestens einen partikulären Füllstoff gemäß Komponente (vi) einrührt und optional einen pH-Wert von 3,0 bis 6,5 unter Zusatz von Säure gemäß Komponente (iii) einstellt.

8. Verfahren nach Anspruch 7,
**dadurch gekennzeichnet,**
**dass** man nach der Dosierung der Komponenten (ii) und (i) über eine Zeitspanne von 30 bis 90 Minuten rührt und auf eine Temperatur im Bereich von 50 bis 70 °C erwärmt.

9. Verfahren nach Anspruch 7 oder 8,
**dadurch gekennzeichnet,**
**dass** man nach der Dosierung der Komponenten (iv) sowie optional (v) über eine Zeitspanne von 30 bis 300 Minuten rührt und bei eine Temperatur im Bereich von 50 bis 70 °C nachreagieren lässt.

10. Verfahren nach einem der Ansprüche 7 bis 9,
**dadurch gekennzeichnet,**
**dass** man den bei der Umsetzung entstandenen Hydrolysealkohol, Methanol und/oder Ethanol aus dem System unter vermindertem Druck entfernt und gegebenenfalls die dabei entfernte Menge an Alkohol durch eine entsprechende Menge an Wasser ersetzt.

11. Verfahren nach einem der Ansprüche 7 bis 10,
**dadurch gekennzeichnet,**
**dass** man das Umsetzungsprodukt nach Abkühlen auf Raumtemperatur über eine Lackfilter filtriert.

12. Verfahren nach einem der Ansprüche 7 bis 11,
**dadurch gekennzeichnet,**
**dass** man mindestens einen partikulären Füllstoff aus der Reihe Fällungskieselsäure, pyrogener Kieselsäure, kristalliner Silica, Kaolin, Feldspat, Talkum, Zinkoxid, Eisen(III)oxid, Aluminiumoxid, Titandioxid in das besagte Umsetzungsprodukt oder in das Filtrat eindispergiert und dabei einen Füllstoffgehalt von 5 bis 70 Gew.-%, bezogen auf die Zusammensetzung, einstellt.

13. Wässrige Sol-Gel-Zusammensetzung erhältlich nach einem der Ansprüche 7 bis 12.

14. Verwendung einer wässrigen Sol-Gel-Zusammensetzung nach einem der vorangehenden Ansprüche indem man in die wässrige, lagerstabile Sol-Gel-Zusammensetzung Zink-Partikel [auch kurz Zinkstaub genannt] eindispergiert, wobei die Zink-Partikel eine durchschnittlichen Partikelgröße von 3 µm bis 90µm aufweisen und als Katalysator für die Aushärtung der Dispersion dienen, und man die so erhaltene Dispersion als Korrosionsschutzmittel oder als Zusatz in Korrosionsschutzmitteln oder in Lacken oder in Farben verwendet.

15. Verwendung einer wässrigen Sol-Gel-Zusammensetzung nach einem der vorangehenden Ansprüche als lagerstabile Vorstufe für Zinkstaubfarben.

16. Verwendung einer wässrigen Sol-Gel-Zusammensetzung nach einem der vorangehenden Ansprüche als lagerstabile Vorstufe für Zinkstaubfarben, wobei man bei der Zubereitung der Zinkstaubfarbe der wässrigen Sol-Gel-Zusammensetzung neben Zinkpulver zusätzlich Zinkchlorid und/oder Magnesiumchlorid zusetzt.
